# EUROPEAN PATENT APPLICATION

(11) **EP 4 809 817 A1**
(43) Date of publication of application: **23.09.2026**
(21) Application number: 25164116.3
(22) Date of filing: 17.03.2025
(51) Int. Cl.: A01G 23/00, B66C 23/00

(54) **TELESCOPING BOOM ASSEMBLY**

(71) Applicant: Deere & Company, Moline, IL 61265 (US)
(72) Inventor: VESANEN, PEKKA, 68163 Mannheim (DE)
(74) Representative: Holst, Sönke

(57) **Abstract**

A telescoping boom assembly (20) with a proximal end (30) and a distal end (32) comprises:
an outer tube (34);
a central tube (36) slidably mounted within the outer tube (34);
an inner tube (38) slidably mounted within the central tube (36);
a linear actuator (40) with a housing (42) located between the central tube (36) and the inner tube (38) and coupled to the proximal end of the outer tube (34) and a movable output element coupled to the distal end of the central tube (36) and adapted to expand and retract the central tube (36) within the outer tube (34); and
a mechanism coupling the central tube (36) to the inner tube (38) for moving the inner tube (38) with respect to the central tube (36) as the central tube (36) moves with respect to the outer tube (34)..

## Description

### Prior Art

Telescoping boom assemblies, also named jibs, can be used for mounting a tool to a vehicle in a linearly movable manner, for example on a forestry machine. The tool can be a harvester head of a tree harvester or a grapple of a forwarder, and the boom is mounted at the outer end of a crane arrangement which is provided with a number of degrees of freedom, usually at least around the vertical axis and a horizontal axis (cf. SE 546 161 C2 and US 2019/0315604 A1, both not showing details of the boom). Telescoping booms are also used on some types of cranes, vehicles with liftable platforms and on telescopic handlers.

A telescoping boom assembly is for example described in US 3 809 249 A. The boom assembly comprises an inner tube, a central tube and an outer tube, all having a proximal end and a distal end. All tubes have a rectangular section and in the retracted position, the inner tube is within the central tube and the central tube is within the outer tube. A linear actuator in the form of a double acting hydraulic cylinder is connected with its housing to the proximal end of the outer tube and with its rod end to a fourth tube mounted within the inner tube. The actuator thus directly moves the fourth tube and the central tube, and the movement of the central tube is transmitted to the inner tube by chain mechanism such that the inner tube performs the same movement with respect to the central tube as the central tube moves with respect to the outer tube, i.e., the distal end of the inner tubes moves twice the distance the central tube and the rod end of the linear actuator move. With exception of an end of the chain and a conduit to the tool at the distal end, the assembly is contained within the outer tube.

US 2003/0205547 A1 shows another telescoping boom assembly with the linear actuator inside the central tube and the rod mounted to the proximal end of the outer tube. The next inner tube and a fourth, innermost tube are connected to the central tube by chain mechanisms and surround the linear actuator in their retracted position.

DE 10 2012 001 184 B1 describes another telescoping boom assembly with an inner tube, a central tube and an outer tube. The linear actuator is outside the outer tube and moves the central and inner tube by means of distinct chain or rope mechanisms, separately transmitting the movement of the distal end of the actuator to the central tube and the inner tube.

### Problem

In particular in forestry environments, it is desirable to have the linear actuator within the outer tube, since there it is located at a protected position, while actuators outside the outer tube like in DE 10 2012 001 184 B1 can be damaged by trees and branches. On the other hand, mounting the linear actuator inside the boom such that the actuator is surrounded by the inner tube when the boom is retracted requires a separate mechanical drive connection between the actuator and central tube, realized in US 3 809 249 A by the fourth tube, or when the housing of actuator is fixed to the central tube while the rod is mounted to the proximal end of the outer tube, like in US 2003/0205547 A1, requires passageways for hydraulic fluid within the rod of the actuator. This however has the disadvantage that no actuator with integrated position sensors can be used due to the hydraulic passageways in the rod, since such actuators need sufficient space within the rod for position sensing (cf. DE 197 47 949 A1).

It is an object of the present invention to overcome or at least reduce one or more of those disadvantages.

### Summary

The present invention is defined by the claims.

A telescoping boom assembly with a proximal end and a distal end comprises:
an outer tube;
a central tube slidably mounted within the outer tube;
an inner tube slidably mounted within the central tube;
a linear actuator with a housing located between the central tube and the inner tube, the housing coupled to the proximal end of the outer tube, the linear actuator having a movable output element coupled to the distal end of the central tube and adapted to move the central tube within the outer tube; and
a mechanism coupling the central tube to the inner tube for moving the inner tube with respect to the central tube as the central tube moves with respect to the outer tube.

In other words, the boom assembly comprises three (or more) tubes, with an outer tube surrounding a central tube which surrounds an inner tube. A linear actuator moves the central tube with respect to the outer tube and the movement of the latter is transferred to the inner tube, such that when the central tube moves a certain distance towards the distal or proximal end with respect to the outer tube, the inner tube moves the same distance and in the same direction with respect to the central tube. To provide a self-contained and simple telescoping boom assembly, the linear actuator is located (sandwiched) between the outer tube and the central tube. The linear actuator is connected with its housing to the proximal end of the outer tube and the output element of the linear actuator is connected to the distal end of the central tube.

The proposed assembly has a number of advantages. For example, since there is no linear movement between the housing of the actuator and the outer tube due to the direct connection between the outer tube and the housing, the (hydraulic or electric) power for driving the linear actuator can be provided from the outer tube to the housing without extendable lines (like passages in a cylinder rod). Also, the direct connection between the output element of the actuator and the central tube simplifies the assembly over the cited prior art. The linear actuator is mounted at a protected position between the outer tube and the central tube and nevertheless allows the central tube to slide within the outer tube, without any openings needed in the outer tube to connect the actuator to the central tube.

The described mechanism can be used on any type of vehicle, like construction vehicles, agricultural vehicles like telescopic loaders or forestry vehicles like a harvester or a forwarder.

### Embodimen

An embodiment of the invention is shown in the drawings, in which:
- Fig. 1: is a schematical view of an off-road vehicle in the form of a forwarder with a crane having a telescoping boom at its outer end,
- Fig. 2: is a vertical section of the boom of the vehicle of Fig. 1 in retracted position;
- Fig. 3: is a vertical section of the boom of the vehicle of Fig. 1 in extended position,

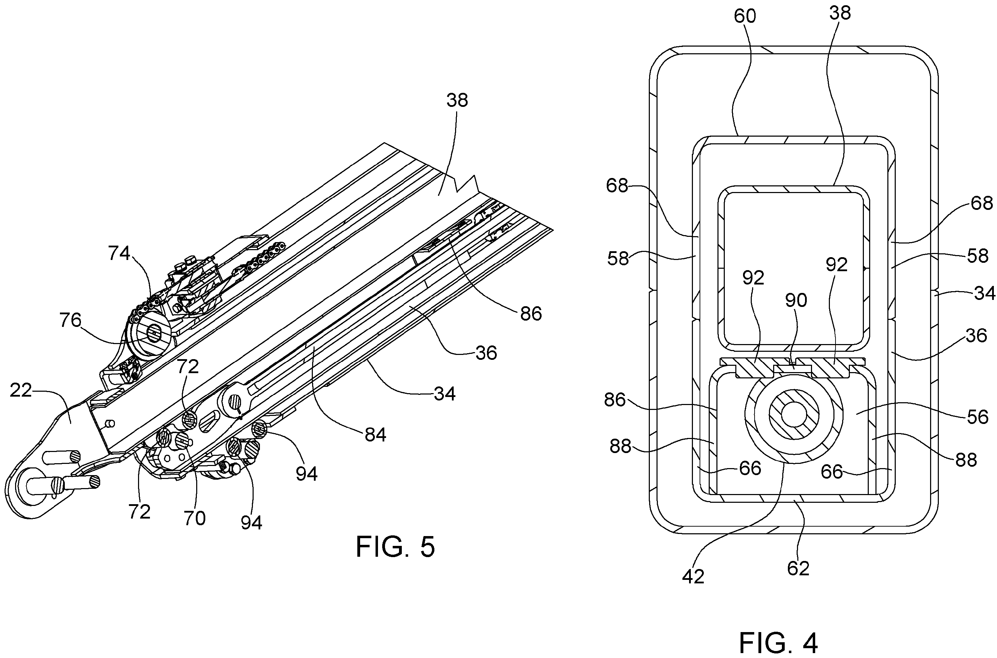

- Fig. 4: is a section through the boom at the lines 4-4 of Fig. 2,
- Fig. 5: is a perspective lateral section through the distal end of the boom in the retracted position,
- Fig. 6: is a perspective lateral section through the proximal end of the boom in the retracted position, and
- Fig. 7: is a perspective view of a sledge and a support element supporting an inner tube on a central tube of the boom.

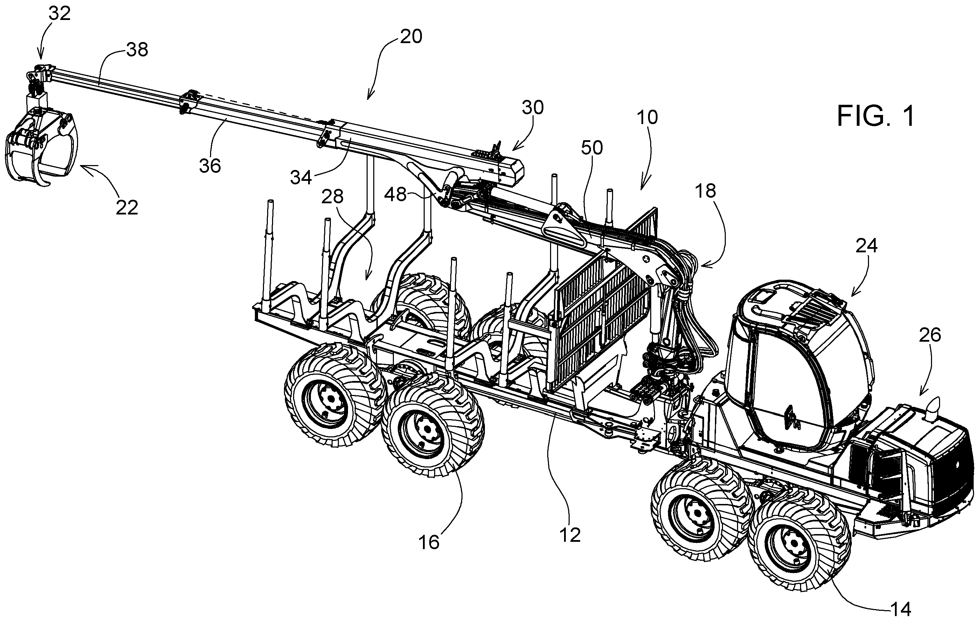

Reference is now made to Fig. 1, in which an off-road vehicle 10 is shown. The off-road vehicle 10 comprises an articulated chassis 12, supported on ground engaging means in the form of driven front wheels 14 and rear wheels 16. The chassis 12 supports a crane 18 on the outer end of which the proximal end 30 of a telescoping boom assembly 20 is mounted, holding at its distal end 32 a tool 22 in the form of a grapple. Chassis 12 also supports an operator cabin 24 and an engine compartment 26 with an engine for providing mechanic, electric and/or hydraulic power to driven elements of the vehicle 10. The vehicle 10 of Fig. 1 is a forwarder with a load space 28 for receiving tree trunks collected by means of the tool 22. The crane 18 is at least rotatable with respect to chassis 12 around the vertical axis located in the area of the articulation of the chassis 12 and has an upper part 50 with adjustable inclination, supporting the proximal end 30 of boom assembly 20 at the outer end.

In other embodiments, the telescoping boom assembly 20 can be used on other forestry vehicles, like harvesters or on a telescopic loader or on a vehicle with a liftable platform for example for servicing road lanterns.

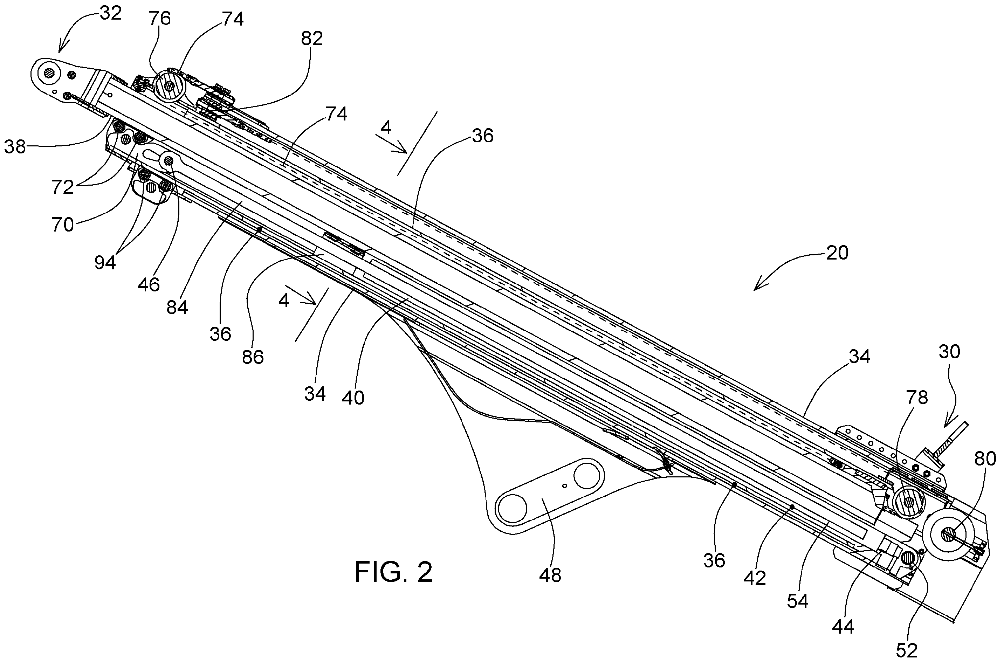

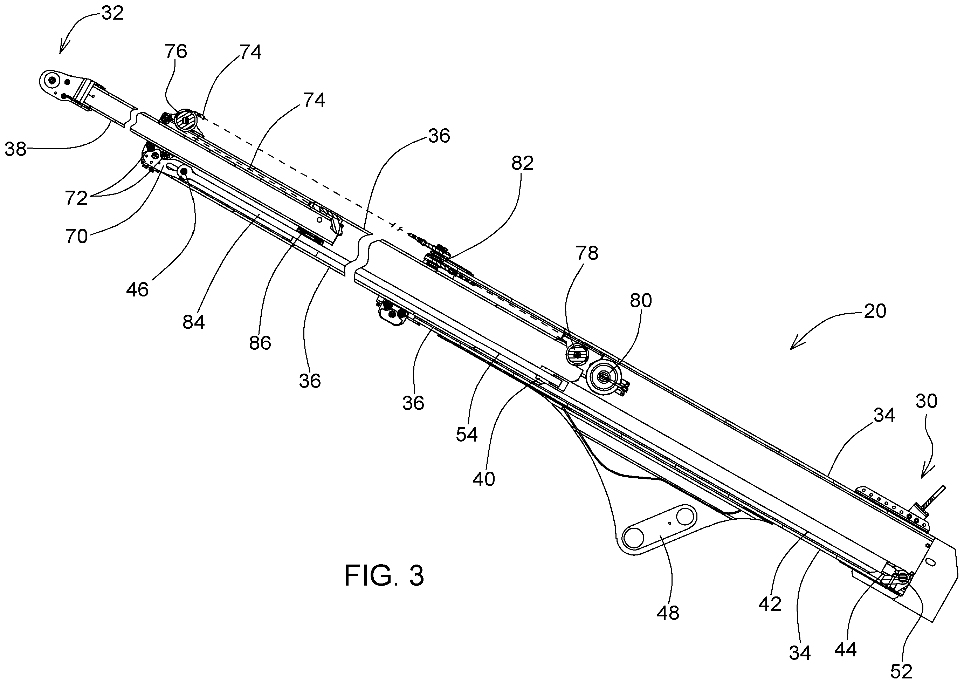

The telescoping boom assembly 20 comprises an outer tube 34, a central tube 36 and an inner tube 38 which can be moved by a linear actuator 40 between a retracted position as shown in Fig. 2 and an extended position as shown in Fig. 1 and 3 and any position between the fully retracted and fully extended positions. The outer tube 34 surrounds the central tube 36 which on its end surrounds the inner tube 38. In the retracted position, the distal end 32 of the boom assembly 20 corresponds to the distal ends of the tubes 34, 36, 38 and the proximal end 30 of the boom assembly 20 corresponds to the proximal ends of the tubes 34, 36, 38.

Reference is now made to Fig. 2. The outer tube 34 is connected to a flange 48 for mounting the outer tube 34 to the outer end of the upper part 50 of crane 18. As mentioned, the central tube 36 is located inside the outer tube 34 in a telescoping manner by means of a linear actuator 40. The latter is, in the embodiment shown, a double-acting hydraulic cylinder with a housing 42 that is on its proximal end 44 connected to outer tube 34 on a pivot pin 52 pivoting around an axis extending transverse to the direction of extension and retraction of boom assembly 20. Pin 52 can be supported in the sidewalls of outer tube 34 or on a bracket fixed to the outer tube 34 or be connected in another suitable manner to outer tube 34. The mechanical connection (and the position of force transfer) between the proximal end of housing 42 to the proximal end of outer tube 34 is thus in the direct vicinity of the proximal ends of housing 42 and outer tube 34. Housing 42 of linear actuator 40 does not move with respect to the outer tube 34 when linear actuator 40 is extended, except for relatively small movements around pin 52 due to mechanical tolerances in the telescoping boom 20.

The housing 42 of the actuator 40 contains a piston 54 with a rod 84 serving as output element of the linear actuator 40, which rod 84 is at its distal end connected via another pivot pin 46, pivoting around an axis extending transverse to the direction of extension and retraction of boom assembly 20, to the central tube 36, via a support sledge 70 sliding on the upper interior surface of the outer tube 34 and supporting the distal end of central tube 36 on rollers 72. Here, the mechanical connection (and the position of force transfer) between the distal end of rod 84 to the distal end of central tube 36 is thus in the direct vicinity of the distal ends of rod 84 and the central tube 36.

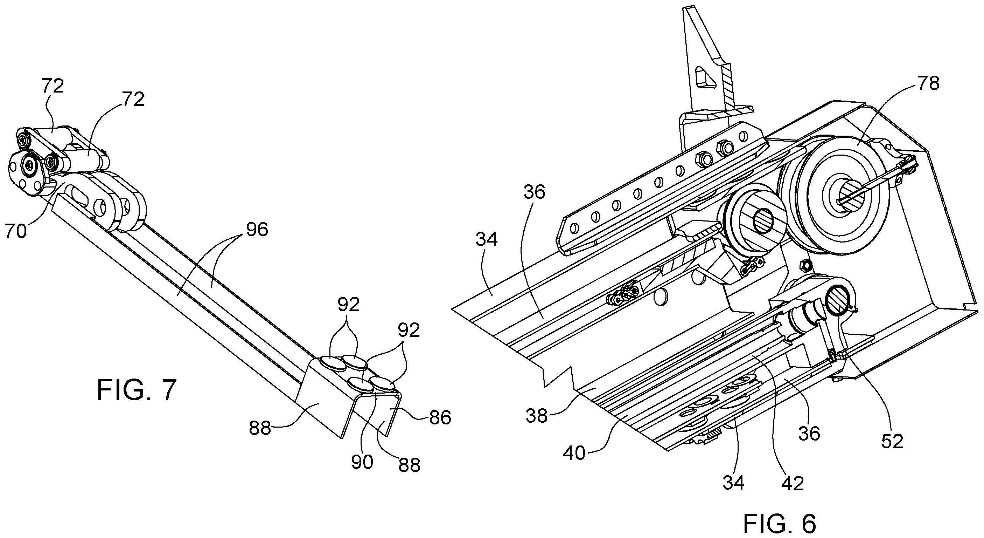

The central tube 36 has vertical side walls 58, a horizonal top wall 60 and horizontal bottom wall 62. The linear actuator 40 is mounted within the interior 56 of the central tube 36, in the lateral direction between the sidewalls 58 of the central tube 36 and in the vertical direction between the bottom wall 62 of the central tube 36 and the bottom wall of the inner tube 38. The inner tube 38 is thus surrounded by the upper parts 68 of the side walls 58, the top wall 60, and on the underside by the linear actuator 42. In order to support the inner tube 38 on the central tube 36, a support element 86 is mounted on the central tube 36. Support element 86 is, when the linear actuator 42 and thus boom 20 is fully retracted, located immediately in front of the front end of linear actuator 42, as shown in Fig. 2. Support element 86 has vertical side walls 88 and a horizontal top wall 90, on which one or more slide pads 92 are mounted. The slide pad or pads 92 is or are of a suited material with relatively low friction and support the inner tube 38 in a sliding manner. Since support element 86 is fixed to central tube 36, it moves with the latter once it is retracted or extended. As shown in Fig. 7, support element 86 is connected to sledge 70 by longitudinal struts 96.

As mentioned, outer tube 34 encloses the side walls 58, the bottom wall 62 and the top wall 60 of the central tube 36 and the bottom wall 62 of the central tube 36 is supported on the bottom of the outer tube 34, generally by low-friction support pads (not shown) and on the distal end, on rollers 94 supported on outer tube 34. The pivot pins 52 and 46 allow a certain vertical movement of central tube 36 with respect to outer tube 34 during retraction and extension of boom assembly 20. The inner tube 38 is supported by the rollers 72 at the front of central tube 36 and on the support element 86 which is located in the retracted position shown in Fig. 2 immediately in front of the distal end of linear actuator 40.

The movement of the central tube 36 during retraction and extension of boom assembly 20, performed by linear actuator 40, is transferred also to the inner tube 38 by means of a chain 74 or rope with a first end fixed to the upper, distal end of the outer tube 34, entrained around a roller 76 supported on the upper, distal end of the central tube 36 and a roller 78 at the upper, proximal end of the central tube 36 and a second end fixed to the proximal end of the inner tube 38. In a similar manner, flexible hydraulic and/or electric lines can be routed to the distal end of the inner tube 38 for actuators and/or sensors of the tool 22, entrained around another roller 80 at the proximal end of the central tube 36 and a further roller 82 at the distal end of the outer tube 34. The described mechanism thus couples the central tube 36 to the inner tube 38 for moving the inner tube 38 with respect to the central tube 36 as the central tube 36 moves with respect to the outer tube 34.

The function of the boom assembly 20 is thus as follows: Starting from the retracted position as shown in Fig. 2, the actuator 40 extends, as its piston chamber is filled with pressurized hydraulic fluid and the piston 54 moves to the left in Fig. 2, with its rod 84 the central tube 36 towards the distal position of boom 20, i.e., to the left in Fig. 2.. The chain 74 or rope pulls the inner tube 38 at the same time out of the central tube 36. Retraction is achieved in a similar manner, by pressurizing the rod chamber of the actuator 40, thus retracting the central tube 36 and via chain 74 or rope the inner tube 38.

After all, it is apparent that the boom assembly 20 is self-contained within the outer tube 36, since the actuator 40 and the chain or rope mechanism for moving the inner tube 38 are located at the interior of the outer tube 36, just with exception of the roller 76 and the strands of chain 74 or rope outside the distal end of the outer tube 36. The housing 42 of actuator 40 is not moving with respect to the outer tube 36 but fixed thereto. This means that no hydraulic lines need to be routed through rod 84, what increases stability thereof and/or allows to use a cylinder with a position sensor inside rod 84 for sensing the position of rod 84. This position sensor can be used for automatic length control of boom assembly 20.

It should be noted that the rollers 72 and 94 could be replaced with one or more slide pads, and that the slide pad or pads 92 could be replaced with one or more roller.

## Claims

1. A telescoping boom assembly (20) with a proximal end (30) and a distal end (32), the boom assembly (20) comprising:
an outer tube (34);
a central tube (36) slidably mounted within the outer tube (34);
an inner tube (38) slidably mounted within the central tube (36);
a linear actuator (40) with a housing (42) located between the central tube (36) and the inner tube (38), the housing (42) coupled to the proximal end of the outer tube (34), the linear actuator (40) having a movable output element coupled to the distal end of the central tube (36) and adapted to move the central tube (36) within the outer tube (34); and
a mechanism coupling the central tube (36) to the inner tube (38) for moving the inner tube (38) with respect to the central tube (36) as the central tube (36) moves with respect to the outer tube (34).

2. The telescoping boom assembly (20) of claim 1, wherein the linear actuator (40) is a double-acting hydraulic cylinder having a rod (84) as the movable output element connected to the central tube (36).

3. The telescoping boom assembly (20) of claim 1 or 2, wherein the inner tube (38) is supported on the central tube (36) by a support element (86) located in the longitudinal direction of the boom assembly (20) between the housing (42) of the linear actuator (40) and the distal end (32) of the boom assembly (20), the support element (86) connected to and moving with the central tube (36).

4. The telescoping boom assembly (20) of claim 3, wherein the support element (86) comprises lateral side walls (88) and an upper, transverse wall (90) on which the inner tube (38) is supported on one or more slide pads (92).

5. The telescoping boom assembly (20) of one of claims 1 to 4, wherein a sledge (70) slidably supported on the distal end of the central tube (36) supports the inner tube (38).

6. The telescoping boom assembly (20) of claim 5, wherein the sledge (70) and the support element (86) are connected by longitudinal struts (96).

7. The telescoping boom assembly (20) of claim 5 or 6, wherein the housing (42) of the linear actuator (40) is coupled by a pin (52) to the proximal end of the outer tube (36) and the movable output element of the linear actuator (40) is coupled by a pin (46) to the sledge (70).

8. The telescoping boom assembly (20) of one of claims 5 to 7, wherein the sledge (70) supports the distal end of the inner tube (38) on rollers (72).

9. The telescoping boom assembly (20) of one of the preceding claims, wherein the mechanism coupling the central tube (36) to the inner tube (38) for moving the inner tube (38) with respect to the central tube (36) as the central tube (36) moves with respect to the outer tube (34) comprises a chain (74) or rope fixed with its first end to the distal end of the outer tube (34) and with its second end to the inner tube (38) and entrained round rollers (76, 78) fixed to the central tube (36).

10. A vehicle (10) with a telescoping boom assembly (20) according to one of the preceding claims.

11. The vehicle (10) of claim 10 in the form of a forwarder or harvester for forestry use.

## Amended claims

### Amended claims in accordance with Rule 137(2) EPC.

1. A telescoping boom assembly (20) with a proximal end (30) and a distal end (32), the boom assembly (20) comprising:
an outer tube (34);
a central tube (36) slidably mounted within the outer tube (34);
an inner tube (38) slidably mounted within the central tube (36);
a linear actuator (40) with a housing (42) located between the central tube (36) and the inner tube (38), the housing (42) coupled to the proximal end of the outer tube (34), the linear actuator (40) having a movable output element coupled to the distal end of the central tube (36) and adapted to move the central tube (36) within the outer tube (34); and
a mechanism coupling the central tube (36) to the inner tube (38) for moving the inner tube (38) with respect to the central tube (36) as the central tube (36) moves with respect to the outer tube (34).

2. The telescoping boom assembly (20) of claim 1, wherein the linear actuator (40) is a double-acting hydraulic cylinder having a rod (84) as the movable output element connected to the central tube (36).

3. The telescoping boom assembly (20) of claim 1 or 2, wherein the inner tube (38) is supported on the central tube (36) by a support element (86) located in the longitudinal direction of the boom assembly (20) between the housing (42) of the linear actuator (40) and the distal end (32) of the boom assembly (20), the support element (86) connected to and moving with the central tube (36).

4. The telescoping boom assembly (20) of claim 3, wherein the support element (86) comprises lateral side walls (88) and an upper, transverse wall (90) on which the inner tube (38) is supported on one or more slide pads (92).

5. The telescoping boom assembly (20) of one of claims 1 to 4, wherein a sledge (70) slidably supported on the distal end of the central tube (36) supports the inner tube (38) and the housing (42) of the linear actuator (40) is coupled by a pin (52) to the proximal end of the outer tube (36) and the movable output element of the linear actuator (40) is coupled by a pin (46) to the sledge (70).

6. The telescoping boom assembly (20) of claim 5, wherein the sledge (70) and the support element (86) are connected by longitudinal struts (96).

7. The telescoping boom assembly (20) of one of claims 5 or 6, wherein the sledge (70) supports the distal end of the inner tube (38) on rollers (72).

8. The telescoping boom assembly (20) of one of the preceding claims, wherein the mechanism coupling the central tube (36) to the inner tube (38) for moving the inner tube (38) with respect to the central tube (36) as the central tube (36) moves with respect to the outer tube (34) comprises a chain (74) or rope fixed with its first end to the distal end of the outer tube (34) and with its second end to the inner tube (38) and entrained round rollers (76, 78) fixed to the central tube (36).

9. A vehicle (10) with a telescoping boom assembly (20) according to one of the preceding claims.

10. The vehicle (10) of claim 9 in the form of a forwarder or harvester for forestry use.
